# EUROPEAN PATENT SPECIFICATION

(11) **EP 0 613 119 B1**
(45) Date of publication and mention of the grant of the patent: **12.08.1998**
(21) Application number: 94102654.4
(22) Date of filing: 22.02.1994
(51) Int. Cl.: G11B 5/39

(54) **Magnetoresistive sensor and method for manufacturing the same**
Magnetoresistiver Sensor und Herstellungsverfahren
Capteur magnétorésistif et procédé de fabrication

(30) Priority: 22.02.1993 JP 31039/93
(43) Date of publication of application: 31.08.1994
(73) Proprietor: NEC CORPORATION, Tokyo (JP)
(72) Inventor: Motomura, Yoshihiro, c/o NEC Corporation, Tokyo (JP)
(74) Representative: Pätzold, Herbert, Dr.-Ing.

(56) References cited:
- EP-A- 0 346 817
- US-A- 3 829 896
- US-A- 4 024 489
- US-A- 4 103 315
- US-A- 4 663 685

## Description

### BACKGROUND OF THE INVENTION

### (a) Field of The Invention

The present invention relates to a magnetoresistive (MR) sensor according to the preamble of claim 1 and a method for manufacturing an MR sensor, and more particularly, to an MR sensor for use in an MR head for reading out data stored on a magnetic recording medium by utilizing the MR effect of a ferromagnetic MR layer and a method for manufacturing the same.

### (b) Description of Related Art

Based on a fact that a large output signal is obtained from an MR sensor (or element) and the signal is not affected by the relative speed between the sensor and a magnetic recording medium, application of an MR sensor to a reproducing head of a compact magnetic recording device having a high recording density has been expected. However, in order to put an MR sensor to a practical use as the reproducing head of the magnetic recording device, two fundamental requirements should be met.

One of the requirements is to make the MR sensor linearly respond to the magnetic signal provided by a magnetic recording medium. To meet this requirement, an MR sensor must be applied with a bias magnetic field in a direction normal to a sense current (the magnetic field will be referred to as "transverse bias field" hereinafter) so that the angle θ between the sense current and the direction of magnetization of the MR layer forms a predetermined angle, preferably 45° . Various means have been proposed for applying a transverse bias field to the MR sensor.

US-A-4,663,685 describes a magnetoresistive sensor in which an MR layer has a uniaxial anisotropy. In this publication an exchange bias layer has a uniaxial anisotropy and being magnetized provides an exchange coupling to the MR layer.

Japanese Patent Laid-Open Publication No. 49(1974)-74523 describes a structure in which an MR sensor has a laminate of an MR layer and a conductive shunt layer having a predetermined resistance. In this publication, a transverse bias field is applied by a branch current flowing through the shunt layer.

Japanese Patent Laid-Open Publication No. 52(1977)-62417 describes another MR sensor comprising a laminate including a bias layer, in which a non-magnetic intermediate layer is sandwiched between a soft magnetic bias layer and an MR layer. In this publication, the soft magnetic bias layer is magnetized by a sense current supplied to the MR layer, and in turn generates a transverse bias filed.

The other requirement is to suppress the Barkhausen effect which generates a noise (Barkhausen noise) in a reproduced signal and deteriorates the reproducibility of stored signals. The Barkhausen effect is considered to originate from the movement of magnetic domain walls urged by a diamagnetic field at the ends of a sensing area of the MR layer. Many approaches have been proposed for forming a sensing area in a single magnetic domain structure, thereby removing magnetic domain walls itself.

Japanese Patent Laid-Open Publication No. 62(1987)-40610 describes a structure in which antiferromagnetic layers of Fe-Mn are formed at opposing ends of the sensing area of an MR layer, for applying a bias field thereto in the direction of the sense current (the magnetic field will be referred to as "longitudinal bias field" hereinafter). The longitudinal bias field is applied to the MR layer by an exchange interaction from the antiferromagnetic layer. In this publication, a soft magnetic bias layer is also formed for applying a transverse bias field.

In the last publication as mentioned above, the MR sensor employs a multi-layer structure in which the layers for applying a transverse bias field and a longitudinal bias field are formed separately. The multi-layer structure, however, causes a complexity in the manufacturing process and a decrease in the yield of the MR sensor. Besides, the layers for generating a longitudinal bias field and a transverse bias field should be separately designed and thereafter be evaluated as a whole, which increases the complexity in designing of the MR sensor. Furthermore, since both the bias layers for generating the transverse bias field and the longitudinal bias field are laminated on the ferromagnetic MR layer, the thickness of the MR sensor is increased. Hence, when the MR sensor is to be held between magnetic shielding elements, for example, the gap between the magnetic shielding elements holding the sensing area of the MR sensor cannot be made small, so that the resolution in the reproduced signals obtained by the MR head cannot be increased.

### SUMMARY OF THE INVENTION

In view of foregoing, it is an object of the present invention to provide an MR sensor for use in an MR head of a high sensitivity, substantially free from the Barkhausen noise, and of a simpler structure.

Said object is solved with the features of the characterizing portion of claim 1 and with the features of related method claim 8.

Preferred embodiments of the invention are mentioned in the subclaims.

### BRIEF DESCRIPTION OF THE DRAWINGS

The above and further object as well as features and advantages of the present invention will be apparent from the following description, referring to the accompanying drawings in which:
Fig. 1A is a schematic plan view of an MR sensor according to an embodiment of the present invention;
Figs. 1B and 1C are cross-sectional views taken along the lines A-A and B-B in Fig. 1A, respectively; and
Figs. 2A, 2B and 2C are perspective views showing successive steps for manufacturing the MR sensor of Fig. 1A.

### DETAILED DESCRIPTION OF THE PREFERRED EMBODIMENTS

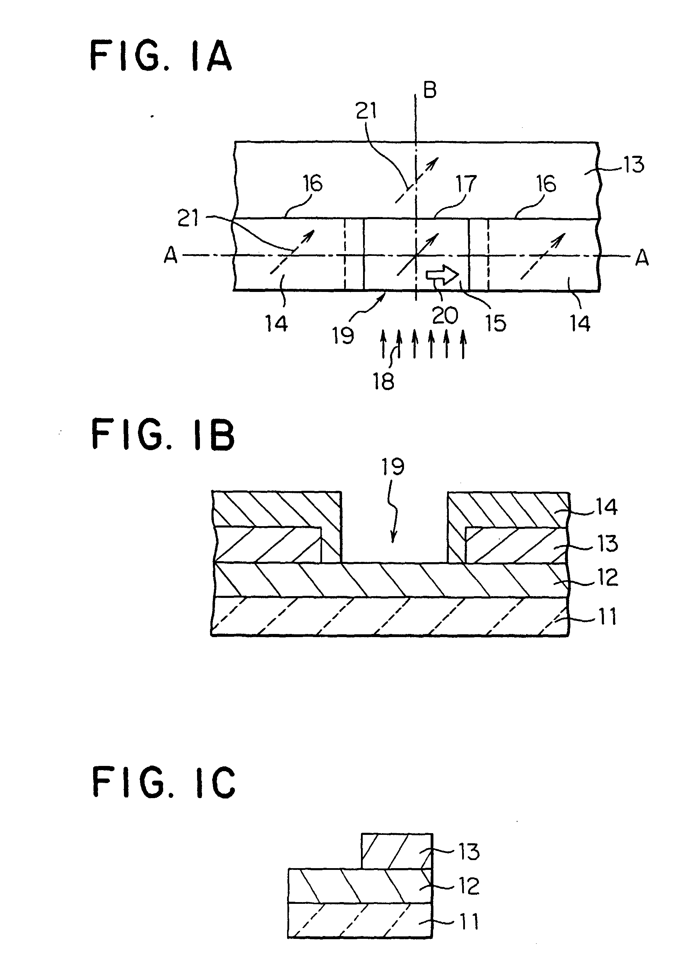

Figs. 1A, 1B and 1C show an MR sensor according to an embodiment of the present invention. In the drawings, an MR layer 12 is formed on a non-magnetic substrate 11 and covered by a bias layer 13 at the peripheral portion thereof. The bias layer 13 is formed of an antiferromagnetic material or a ferrimagnetic material. The MR layer 12 has a sensing area 15 of a rectangular shape at the central portion in the longitudinal direction, i.e. the direction of the axis of the uniaxial anisotropy of the MR layer 12 as designated by an arrow 20. The thickness of the MR layer 12 is, for example, 40 nm (nanometer), and the thickness of the bias layer 13 is, for example, 20 nm.

The bias layer 13 is formed on the MR layer 12 for exposing the sensing area 15 through an opening or cut-out portion of the bias layer 13. The bias layer 13 is formed in direct contact with the MR layer 12, thereby providing an exchange magnetic coupling to the MR layer 12. A pair of electrode layers 14 are formed on the bias layer 13 with the ends thereof contacting the MR layer 12 for supplying a sense current to the MR layer 12 flowing in the longitudinal direction of the arrow 20.

Both edges 16 of each of the electrode layers 14 are aligned with both edges 17 of the sensing area 15 of the MR layer 12, respectively, while the surfaces of the pair of electrode layers 14 opposing each other in the longitudinal direction define the longitudinal ends of the sensing area 15. The MR sensor has an inlet 19, for receiving an external magnetic field 18, located within the plane defined by one of the edges of the electrode layer 14 and one of the edges, i.e. inlet edge 17 of the sensing area 15. The bias layer 13 surrounds the sensing area 15 except for the inlet edge 17 of the sensing area 15.

The axis of the uniaxial magnetic anisotropy of the MR layer 12 is directed in the longitudinal direction, while the axis of the uniaxial magnetic anisotropy of the bias layer 13 is directed in the direction designated by arrows 21. The angle between the longitudinal direction and the axis of the uniaxial magnetic anisotropy of the bias layer 13 is set at 45° . The angle is selected from a substantially acute angel, preferably in a range between 35 ° and 55° .

In operation, when no external magnetic field is applied to the MR sensor, the direction of the magnetization of the MR layer 12 is aligned with the magnetization of the bias layer 13, i.e., the direction of the arrows 21, due to the exchange interaction of the bias layer 13. The magnetization of sensing area 15 of the MR layer 12, however, is readily changed by the magnitude of the external magnetic field applied thereto.

In detail, when no external magnetic field is applied to the MR sensor, the magnetization of the whole area of the MR layer 12 is directed at an angle 45° from the direction of the sense current. That is, the skew angle is set at 45° initially in the sensing area of the MR sensor as in the case where a suitable transverse bias field is applied in the conventional MR sensor. Thus, it is possible to change the skew angle between 0° and 90° , with the neutral position being 45° , in response to changes in magnitude of an external magnetic field applied from a recording medium. Hence, the sensitivity of the MR sensor to the external magnetic field can be set within a linear responsive range.

If the sensing area of the MR layer would assume a multi-domain structure, the magnetostatic energy of the MR layer in the sensing area would be higher than the magnetic energy of the MR layer assuming a single magnetic domain structure. Accordingly, the magnetic domain in the sensing area assumes a single domain structure and remains stable therein so that the magnetization in the sensing area is uniform. As a result, the Barkhausen noise can be eliminated in the the MR sensor similarly to that as eliminated by a suitable longitudinal bias field in the conventional MR sensor.

Hence, with the MR sensor according to the embodiment, both of the functions of a transverse bias field and a longitudinal bias field can be obtained by simply forming a single bias layer which surrounds the sensing area of the MR layer at three sides of the sensing area.

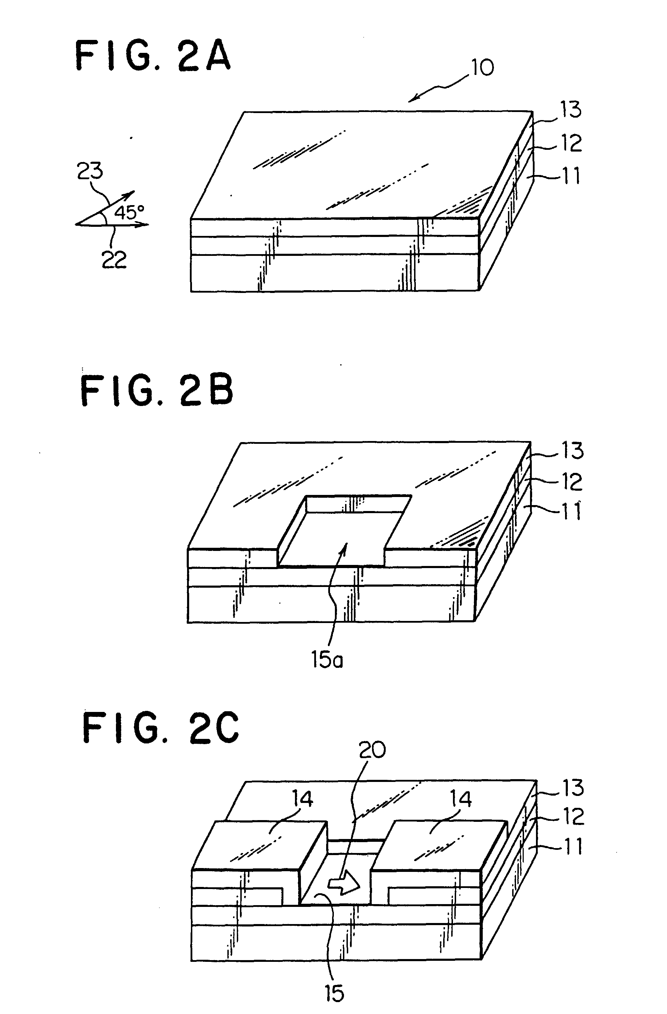

Now, a method for manufacturing an MR sensor according to the present invention will be described with reference to Fig. 2A, 2B and 2C, which show successive steps of manufacturing the MR sensor of Fig. 1A. First, a non-magnetic substrate 1 is prepared. Glass, Si, aluminum oxide, titanium carbide, silicon carbide, sintered body of aluminum oxide and titanium carbide, ferrite, etc. may be used as the material for the non-magnetic substrate 1.

Second, as shown in Fig. 2A, an MR layer 12 of permalloy (Ni:Fe=82:18 wt.%) having a thickness of 40 nm was formed on a main surface of the non-magnetic substrate 11 by using a spattering apparatus. During this step, a DC magnetic field was applied in a first direction 22 relative to the orientation of the substrate 11. The direction 22 is parallel to the main surface of the substrate 11 so that a uniaxial magnetic anisotropy in the direction 22 was induced in the MR layer 12. As the MR layer 12, ferromagnetic alloys such as Ni-Co, Ni-Fe-Co and those including additives may be used other than Ni-Fe. The thickness of the MR layer 12 is preferably in the range between about 10 nm and about 40 nm.

Next, the direction of the DC magnetic field was turned by an angle 45° to a direction 23, which is parallel to the main surface of the substrate 11, while keeping the vacuum condition of the chamber unchanged. Then, a bias layer 13 of Fe-Mn (Fe:Mn=50:50 wt.%) constituting as an antiferromagnetic layer and having a thickness of 20 nm was laminated on the MR layer 12. During this step, the axis of easy magnetization of the bias layer 13 is formed to coincide with the direction 23 of the DC magnetic field as applied.

Subsequently, a first photoresist pattern not shown in the drawing was formed on the surface of the bias layer 13. The laminate of layers 12 and 13 was then subjected to ion-etching under the existence of argon gas so that a rectangular pattern 10 of the laminate having a size of 100 µm in length and 10 µm in width was formed. In this step, the longitudinal direction of the rectangular pattern 10 was made to coincide with the axis of easy magnetization of the MR layer 12. Preferred materials for the bias layer 13 include antiferromagnetic alloys such as Fe-Mn, Ni-Mn, Co-Mn, Fe-Mn-Co and those including additives, as well as ferrimagnetic alloys such as Tb-Fe, Tb-Co and those including additives.

Subsequently, a second photoresist pattern not shown in the drawing was formed on the bias layer 13 of the rectangular pattern 10, then, the bias layer 13 was subjected to ion-etching in the atmosphere of argon for selective removal of the bias layer 3 for forming an opening 15a through which the MR layer 2 is exposed, as shown in Fig. 2B. The size of the opening 15a is 10 µm in length and 5 µm in width. Next, a layer of a conductive material such as gold was deposited, and, as shown in Fig. 2C, was selectively etched to form a pair of electrode layers 14 which are to supply a sense current to the sensing area 15 in the direction 20 of the uniaxial anisotropy of the MR layer 13.

To examine the performances of the MR sensor according to the embodiment as described above, several comparative MR heads as well as an MR head having the MR sensor of Fig. 2C were fabricated. The comparative examples had the same configuration as the MR head of the embodiment except that the first comparative example (Example #1) had an MR sensor in which the whole area of of the MR layer 12 of the rectangular pattern 10 was covered by a bias layer, that the second comparative example (Example #2) was formed such that a bias layer had a square opening or cut-out having a width the same as that of the MR layer 12, thereby forming a sensing area of the MR layer in 10 µm length and 10 µm width, and that the third comparative example (Example #3) was formed as having no bias layer.

A sense current of 10 mA was supplied to each of the MR heads prepared as described above, and an external magnetic field was applied perpendicular to the sense current to obtain data for a R-H curve. The R-H curve indicates the relationship between the change rate of electric resistance (R-value) of the sensing area in the longitudinal direction and the external magnetic field (H-value). The R-H curves are analyzed to obtain the performances of the MR heads in terms of half-value width, bias level and the Barkhausen noise. The half-value width is defined as a width in terms of oersted at which the resistance change of the MR head is 1/2 of the maximum resistance change ΔRmax of the R-H curve of the MR head. The bias level is defined as ΔR/ΔRmax, wherein ΔR is the R-value at which the R-H curve intersects the R-ordinate. Performances of the respective MR heads were shown in Table 1.

**Table 1**

| | Half-value width (oersted) | Bias level | Barkhausen noise |
|---|---|---|---|
| Embodiment | 80 | 0.5 | negligible |
| Example #1 | 150 | 0.5 | negligible |
| Example #2 | 80 | 1.0 | negligible |
| Example #3 | 80 | 1.0 | recognized |

As shown in Table 1, the MR head having an MR sensor of the embodiment has a satisfactory half-value width 80 oersted in a R-H curve, which is an index for the reproduction sensitivity of an MR head and in which smaller values indicate higher sensitivity. The MR head also has a bias level 0.5, which is generally considered a desired value. The bias level is an index for the linear responsive performance of the Mr head, and when the bias level is greater than 0.5, the transverse bias field is considered too small. The Barkhausen noise of the MR head of the embodiment was substantially negligible.

Although the accompanying drawings show the structure in which the MR layer, the bias layer and the electrodes are formed on the substrate in this order, the present invention is not limited to the order of these laminated layers. Similar effects can be obtained in cases where the electrodes, the MR layer and the bias layer are layered on the substrate in this order, as well as in cases where the bias layer, the MR layer and the electrodes are layered on the substrate in this order.

## Claims

1. A magnetoresistive sensor comprising:
a substrate (11);
a ferromagnetic magnetoresistive layer (12) overlying said substrate (11) and having a uniaxial anisotropy;
said ferromagnetic magnetoresistive layer (12) including a sensing area (15) defining an inlet edge (19) thereof for receiving an extemal magnetic field (18) adjacent to said inlet edge (19);
a pair of electrodes (14) for supplying a sense current flowing in a first direction (20) through said sensing area (15);
an exchange bias layer (13) comprising as a main component thereof at least one of an antiferromagnetic material and a ferrimagnetic material and formed in direct contact with said ferromagnetic magnetoresistive layer (12);
said exchange bias layer (13) having a uniaxial anisotropy and being magnetized in a second direction (21) thereby providing an exchange coupling to said ferromagnetic magnetoresistive layer (12);
said first (20) and second (21) direction are parallel to the plane of said magnetoresistive layer (12),
**characterized in that,**
said uniaxial anisotropy of said ferromagnetic magnetoresistive layer (12) is in said first direction;
said exchange bias layer (13) surrounds said sensing area (15) except for said inlet edge (19) of said sensing area (15); and
the angle between said first (20) and said second (21) direction makes substantially an acute angle.

2. A magnetoresistive sensor as defined in claim 1, wherein said acute angle is in the range of about 35° to about 55°.

3. A magnetoresistive sensor as defined in claim 2, wherein said acute angle is about 45°.

4. A magnetoresistive sensor as defined in claim 1, wherein said ferromagnetic magnetoresistive layer (12) comprises as the main component thereof an alloy selected from the group of Ni-Fe, Ni-Co and Ni-Fe-Co.

5. A magnetoresistive sensor as defined in claim 4, wherein said magnetoresistive layer (12) has a thickness of about 10 nm to 40 nm.

6. A magnetoresistive sensor as defined in claim 1, wherein said exchange bias layer (13) comprises as the main component thereof an alloy selected from the group of Fe-Mn, Ni-Mn, Co-Mn, Fe-Mn-Co, Tb-Fe and Tb-Co.

7. A magnetoresistive sensor as defined in claim 1, wherein said sensing area (15) has a rectangular shape with one side parallel to and the other side perpendicular to said first direction (20).

8. A method of manufacturing a magnetoresistive sensor including the steps of:
forming a first layer (12) overlying a substrate (11) and comprising a ferromagnetic magnetoresistive material in the presence of a first DC magnetic field applied in a first direction (22) parallel to the main surface of said substrate (11);
forming a second layer (13) in direct contact with and overlying said first layer (12) in the presence of a second DC magnetic field applied in a second direction (23) parallel to the main surface of said substrate (11),
said second layer (13) comprising at least one of an antiferromagnetic material and a ferrimagnetic material;
the angle between said first (22) and second (23) direction being substantially an acute angle;
forming an opening (15a) in said second layer (13) through which said first layer (12) is exposed, said opening (15a) serving as a sensing area (15);
forming a pair of electrode layers (14), which are to supply a sense current to the sensing area (15) in said first direction (22).

9. A method of manufacturing a magnetoresistive sensor as defined in claim 9, wherein said acute angle is in the range of about 35° to about 55°.

## Patentansprüche

1. Magnetoresistiver Sensor bestehend aus:
einem Substrat (11);
einer ferromagnetischen magnetoresistiven Schicht (12) über dem Substrat (11) mit einer uniaxialen Anisotropie;
die ferromagnetische magnetoresistive Schicht (12) hat einen Meßbereich (15) mit einer Eingangskante (19) für den Empfang eines äußeren magnetischen Felds (18) in der Nähe der Eingangskante (19);
ein Elektrodenpaar (14) zum Einspeisen eines Meßstroms, der in einer ersten Richtung (20) durch den Meßbereich (15) fließt;
einer Austausch-Bias-Schicht (13) bestehend in ihrer Hauptkomponente wenigstens aus einem antiferromagnetischen Material und/oder einem ferrimagnetischen Material, die in direktem Kontakt mit der ferromagnetischen Schicht (12) ausgebildet ist;
wobei die Austausch-Bias-Schicht (13) eine uniaxiale Anisotropie hat und in einer zweiten Richtung (21) magnetisiert ist, wodurch eine Austauschkopplung mit der ferromagnetischen magnetoresistiven Schicht (12) bereitgestellt wird;
die erste (20) und zweite (21) Richtung sind parallel zu der Ebene der magnetoresistiven Schicht (12);
***dadurch gekennzeichnet,*** daß
die uniaxiale Anisotropie der ferromagnetischen magnetoresistiven Schicht (12) liegt in der ersten Richtung;
die Austausch-Bias-Schicht (13) umgibt den Meßbereich (15) mit der Ausnahme der Eingangskante (19) des Meßbereichs (15); und
der Winkel zwischen der ersten (20) und der zweiten (21) Richtung ist im wesentlichen ein spitzer Winkel.

2. Magnetoresistiver Sensor nach Anspruch 1,
wobei
der Spitze Winkel im Bereich von ungefähr 35° bis ungefähr 55° liegt.

3. Magnetoresitiver Sensor nach Anspruch 2,
wobei
der spitze Winkel ungefähr 45° hat.

4. Magnetoresitiver Sensor nach Anspruch 1,
wobei
die ferromagnetische magnetoresistive Schicht (12) hauptsächlich aus einer Legierung besteht, die aus der Gruppe Ni-Fe, Ni-Co und Ni-Fe-Co ausgewählt ist.

5. Magnetoresitiver Sensor nach Anspruch 4,
wobei
die magnetoresistive Schicht (12) ungefähr 10 nm bis 40 nm dick ist

6. Magnetoresitiver Sensor nach Anspruch 1,
wobei
die Austausch-Bias-Schicht (13) hauptsächlich aus einer Legierung besteht, die aus der Gruppe Fe-Mn, Ni-Mn, Co-Mn, Fe-Mn-Co, Tb-Fe und Tb-Co ausgewählt ist.

7. Magnetoresitiver Sensor nach Anspruch 1,
wobei
der Meßbereich (15) rechtwinklig ausgebildet ist, mit einer Seite parallel zu und der anderen Seite senkrecht zu der ersten Richtung (20).

8. Verfahren zur Herstellung eines magnetoresistiven Sensors, bestehend aus den Schritten:
Bildung einer ersten Schicht (12) über einem Substrat (11) und bestehend aus einem ferromagnetischen magnetoresistiven Material unter Anwesenheit eines ersten DC Magnetfelds in einer ersten Richtung (22) parallel zur Hauptoberfläche des Substrats (11);
Bildung einer zweiten Schicht (13) über und in direktem Kontakt mit der ersten Schicht (12) in Anwesenheit eines zweiten DC Magnetfelds in einer zweiten Richtung (23) parallel zur Hauptoberfläche des Substrats (11),
die zweite Schicht (13) besteht wenigstens aus einem antiferromagnetischen Material und/oder einem ferrimagnetischen Material;
der Winkel zwischen der ersten (22) und der zweiten (23) Richtung ist im wesentlichen ein spitzer Winkel;
Bildung einer Öffnung (15a) in der zweiten Schicht (13), durch die die erste Schicht (12) freiliegt, wobei
die Öffnung (15a) als Meßbereich (15) dient;
Bildung eines Paars Elektrodenschichten (14), zum Einspeisen eines Meßstroms in der ersten Richtung (22) in den Meßbereich (15).

9. Verfahren zur Herstellung eines magnetoresistiven Sensors nach Anspruch 8,
wobei
der spitze Winkel im Bereich von ungefähr 35° bis ungefähr 55° liegt.

## Revendications

1. Capteur magnétorésistif comprenant :
un substrat (11) ;
une couche magnétorésistive ferromagnétique (12) recouvrant ledit substrat (11) et ayant une anisotropie uniaxiale ;
ladite couche magnétorésistive ferromagnétique (12) comprenant une zone de détection (15) définissant un bord d'entrée (19) de cette dernière pour recevoir un champ magnétique externe (18) adjacent audit bord d'entrée (19) ;
un couple d'électrodes (14) pour délivrer un courant de détection s'écoulant dans un premier sens (20) à travers ladite zone de détection (15) ;
une couche de polarisation d'échange (13) comprenant en tant que composant principal de cette dernière au moins une matière d'une matière antiferromagnétique et d'une matière ferrimagnétique et formée en contact direct avec ladite couche magnétorésistive ferromagnétique (12) ;
ladite couche de polarisation d'échange (13) ayant une anisotropie uniaxiale et étant magnétisée dans un second sens (21) réalisant, de ce fait, un couplage d'échange vers ladite couche magnétorésistive ferromagnétique (12) ;
lesdits premier (20) et second (21) sens sont parallèles au plan de ladite couche magnétorésistive (12),
caractérisé en ce que
ladite anisotropie uniaxiale de ladite couche magnétorésistive ferromagnétique (12) est dans ledit premier sens ;
ladite couche de polarisation d'échange (13) entoure ladite zone de détection (15) sauf pour ledit bord d'entrée (19) de ladite zone de détection (15) ; et
l'angle entre ledit premier (20) et ledit second (21) sens fait sensiblement un angle aigu.

2. Capteur magnétorésistif selon la revendication 1, dans lequel ledit angle aigu est dans la plage d'environ 350 à environ 55°.

3. Capteur magnétorésistif selon la revendication 2, dans lequel ledit angle aigu est d'environ 45°.

4. Capteur magnétorésistif selon la revendication 1, dans lequel ladite couche magnétorésistive ferromagnétique (12) comprend en tant que composant principal de cette dernière un alliage sélectionné à partir du groupe de Ni-Fe, Ni-Co et Ni-Fe-Co.

5. Capteur magnétorésistif selon la revendication 4, dans lequel ladite couche magnétorésistive (12) a une épaisseur d'environ 10 nm à 40 nm.

6. Capteur magnétorésistif selon la revendication 1, dans lequel ladite couche de polarisation d'échange (13) comprend en tant que composant principal de cette dernière un alliage sélectionné parmi le groupe de Fe-Mn, Ni-Mn, Co-Mn, Fe-Mn-Co, Tb-Fe et Tb-Co.

7. Capteur magnétorésistif selon la revendication 1, dans lequel ladite zone de détection (15) a une forme rectangulaire avec un côté parallèle audit premier sens (20) et l'autre côté perpendiculaire à ce dernier.

8. Procédé de fabrication d'un capteur magnétorésistif incluant les étapes suivantes :
la formation d'une première couche (12) recouvrant un substrat (11) et comprenant une matière magnétorésistive ferromagnétique en présence d'un premier champ magnétique à courant continu appliqué dans un premier sens (22) parallèle à la surface principale dudit substrat (11) ;
la formation d'une seconde couche (13) en contact direct. et recouvrant ladite première couche (12) en présence d'un second champ magnétique à courant continu appliqué dans un second sens (23) parallèle à la surface principale dudit substrat (11),
ladite seconde couche (13) comprenant au moins une matière d'une matière antiferromagnétique et d'une matière ferrimagnétique ;
l'angle entre lesdits premier (22) et second (23) sens étant sensiblement un angle aigu ;
la formation d'une ouverture (15a) dans ladite seconde couche (13) à travers laquelle ladite première couche (12) est exposée, ladite ouverture (15a) servant de zone de détection (15) ;
la formation d'un couple de couches d'électrode (14), qui servent à délivrer un courant de détection à la zone de détection (15) dans ledit premier sens (22).

9. Procédé de fabrication d'un capteur magnétorésistif tel que défini à la revendication 9, dans lequel ledit angle aigu est dans la plage d'environ 35° à environ 55°.
